# EUROPEAN PATENT APPLICATION

(11) **EP 0 878 423 A1**
(43) Date of publication of application: **18.11.1998**
(21) Application number: 98201570.3
(22) Date of filing: 12.05.1998
(51) Int. Cl.: B65G 51/06

(54) **Pneumatic post cartridge**

(30) Priority: 14.05.1997 NL 1006045
(71) Applicant: Ergotrans B.V., 7336 AL Apeldoorn (NL)
(72) Inventor: Dragt, Jan-Coen, 7322 TH Apeldoorn (NL)
(74) Representative: Voncken, Bartholomeus Maria Christiaan

(57) **Abstract**

The invention relates to a pneumatic post cartridge having at least one end a body (1) provided with an opening (3), which can be closed by a lid (2). The lid is provided with locking means, which can be operated by operating elements, which operating elements in a non-locked position of the locking means extend beyond the outer circumference of the pneumatic post cartridge and in the locked position are positioned within this outer circumference. In an alternative embodiment the operating elements comprise a plate member (10) slidable on the upper face of the lid, which by way of a transmission mechanism (11) engages the locking means. The locking means can comprise locking pins (6) which in the locked position engage in locking openings (5) formed in the body.

## Description

The invention relates to a pneumatic post cartridge having at least at one end a body provided with an opening which can be closed by a lid.

Pneumatic post cartridges are used to convey a load through a pneumatic post system. This load can comprise many different kinds. As known, in the first place one imagines documents, bonds, money and alike. It is also possible, however, that the load comprises chemical substances, samples or the like.

Generally, yet especially when the load comprises chemical substances and alike, care has to be taken that the load cannot escape from the pneumatic post cartridge unintendedly. Escaping load can give cause to having to replace the pneumatic post system completely or partially, while at the same time health risks for the users may arise. In the past, attempts have already been made to prevent the lid from unintendedly becoming detached from the body during the transportation of the pneumatic post cartridge. The pneumatic post cartridges that have been developed thereto, however, have various disadvantages; they are complicated, heavy and/or clumsy in use.

It is an object of the invention to develop a pneumatic post cartridge of the type mentioned above, in which the disadvantages mentioned before are removed in a simple but nevertheless effective way.

Thereto the pneumatic post cartridge according to the invention is characterised in that the lid is provided with locking means, which can be operated by operating elements, which operating elements in a non-locked position of the locking means extend beyond the outer circumference of the pneumatic post cartridge and in the locked position are positioned within this outer circumference. The combination of operating elements and locking means according to the invention has a double function. Firstly it is avoided that a pneumatic post cartridge can be inserted in the pneumatic post system when the lid is not placed correctly on the opening of the body. Only when the lid closes the opening in the desired way the operating elements are within the circumference of the pneumatic post cartridge and can the latter be inserted in the pneumatic post system. When the lid is not closed correctly, the operating elements still project beyond the outer circumference and in this way prevent the introduction of the pneumatic post cartridge into the pneumatic post system.

When a pneumatic post cartridge has been closed correctly and is positioned in the pneumatic post system, secondly it is prevented effectively that the lid becomes open unintendedly. The inner wall of the pneumatic post system prevents the operating elements from moving such that the locking means reach a non-locked position. Only after the pneumatic post cartridge has been taken from the pneumatic post system, the operating elements can be moved into a position corresponding with the non-locked position of the locking means.

In a preferred embodiment of the pneumatic post cartridge the operating elements comprise a plate member slidable on the upper face of the lid, which by way of a transmission mechanism engages the locking means. This plate member can for example be received in a slot which is formed in the upper face of the lid. In the locked position of the locking means, the plate member fully lies within the outer circumference of the pneumatic post cartridge. In the non-locked position, the plate member at one side projects outside the outer circumference of the pneumatic post cartridge, namely at the lid thereof. In this position inserting the pneumatic post cartridge into the pneumatic post system is not possible.

Besides the function of driving the locking means, this plate member also has another function. In the position projecting outside the outer circumference, the plate member forms an engagement part, in order to be able to move the lid with respect to the body of the pneumatic post cartridge, for example turning, when the lid is screwed onto the body. Herewith the lid may have such a smooth external design that a relative movement of the lid, relative to the body, is not possible without the help of the projecting plate member.

Further a special embodiment of the pneumatic post cartridge according to the invention is mentioned, in which the locking means comprise at least one locking pin, which is movable in the lid substantially transversally to the direction of movement of the plate member, which pin in the locked position engages in a locking opening formed in the body and which contains a locking pin, engaging in a recessed slot in the plate member, which forms an angle with the direction of movement of the plate member. In this way a simple, low maintenance construction of the transmission mechanism between the plate member and the locking pin is obtained. This transmission mechanism is little complicated and does not take much space.

Of course in such a case it is possible, that two oppositely positioned locking pins are applied. In the locked position these locking pins engage in two locking openings, which are formed substantially diametrically in the body. These locking openings can be part of a continuous internal circumferential slot.

In order to improve the practical use of the pneumatic post cartridge according to the invention it is also preferred that it is provided with indication means for the provision of a tangible and/or audible indication of the locked position of the locking means. In this way an indication is given to a user, that the lid has reached the correctly locked position. Enforcement or disruption of a part of the construction of the pneumatic post cartridge is prevented in this way.

The afore mentioned embodiment of the pneumatic post cartridge according to the invention can be realised technically, when in the receiving opening of the lid below the plate member a spring-loaded snap part, such as a ball or alike, is placed, which in the locked position engages in the snap recess which is formed in the underside of the plate member. At the moment that the plate member has reached the position in which the locking means are in the locked position, the snap part, for example a ball, snaps into the snap recess under the influence of the spring force which snap recess is formed in the underside of the plate member. This snapping into the snap recess can be felt or even heard by a user who, at that moment, operates the plate member. An extra function of such a spring loaded snap part is, that an unintended sliding of the plate member is prevented. Although in itself such a sliding of the plate member could not lead to the unlocking of the lid, still in such a case the rim of the plate member could scrape along the inner wall of the pneumatic post system, which preferably has to be avoided.

As already mentioned before, a pneumatic post cartridge is suitable for the conveyance of various materials. These materials can also comprise fluids or other liquid materials. In such a case it is preferred that between the lid and the body a sealing element is placed, which in the locked position brings about a fluid tight engagement between both cartridge components.

In such an embodiment the characterising measures of the pneumatic post cartridge according to the invention provide as an extra function the safeguard and maintenance of the sealing effects of the sealing element. It is therefore not possible that, although the lid is closed, yet the sealing is not fully realised. The arrangement on the contrary, is such that, when the locking means take up their locked position, also at the same time a correct working of the sealing element appears.

In this scope a constructive alternative embodiment of the pneumatic post cartridge according to the invention is mentioned, in which the lid comprises a first part with a downwardly directed frontal circumferential rim receiving the locking means and the operating elements, and a second part received telescopically slidable in this first part and having an upwardly directed circumferential surface positioned axially opposite the frontal circumferential rim wherein between the circumferential rim and the circumferential surface a deformable sealing element is placed with such a dimension that it, at least in the locked position, projects beyond the local outer circumference of the lid for engaging the body of the pneumatic post cartridge and which body is provided with an internal abutment surface for engaging the second part of the lid when placing this into the body.

When in this embodiment of the pneumatic post cartridge the lid is applied into the body, the second part of the lid engages the internal abutment surface of the body. Because of this, the second part of the lid is slid telescopically relative to the first part, and a compression occurs of the deformable sealing element which lies between the circumferential rim and the circumferential surface. Because of this, the sealing element expands in the circumferential direction and engages the inner wall of the body of the pneumatic post cartridge. In this way an optimal sealing is accomplished.

In this scope it is noted, that the terms "downwardly directed" and "upwardly directed" refer to a position of the pneumatic post cartridge, in which the lid is positioned at the upper side. Of course these terms change in correspondence with a different position of the pneumatic post cartridge.

In order to obtain a good cooperation between the first and the second lid part, it is preferred that the first lid part comprises a downwardly directed tubular wall, while the second lid part comprises a shaft part, positionable therein through interposition of an O-ring.

In this respect it is also advantageous when the tubular wall at its lower end comprises an inwardly directed thickening. This inwardly directed thickening prevents the O-ring together with the second lid part from falling out of the downwardly directed tubular wall of the first lid part. The dimension of the thickening is such, that a mounting of the second lid part with the O-ring, however, remains possible.

As already mentioned before, it is possible to screw the lid into the body. The cooperation between the locking means and the body is then such, that only in a certain in-between rotation position a locking can take place. Additionally, the length of the cooperating screw threads or alike has to be such that these only engage each other when the locking means are already within the body. For otherwise it would be possible to move the locking means into the projecting locking position without engaging into the body, while the lid, however, has already been screwed somewhat into the body. Of course such a situation is undesired. Besides a screw engagement between the lid and the body also other attachment methods are possible, such as the use of a bayonet coupling and alike.

For the sake of completeness it is noted, that when the pneumatic post cartridge is used for the conveyance of chemical substances, fluids and alike, various additional measures can be taken to increase the safety of the conveyance. For example it is possible to integrate chemical indication means into the pneumatic post cartridge, which can indicate a leakage of the packagings conveying the substance, or partitions formed inside the body of the pneumatic post cartridge, which exert a subdued working on the flow when conveying fluid media. Such a subdued working can be important, since the pneumatic post cartridges are subject to high accelerations.

Hereinafter the invention will be elucidated further, referring to the drawing, in which an embodiment of a pneumatic post cartridge according to the invention is illustrated.
Figure 1 shows a pneumatic post cartridge according to the invention, partially in a longitudinal cross-section;
Figure 2 shows, on a larger scale, a longitudinal cross-section through the lid of the pneumatic post cartridge shown in figure 1 in the non-locked position;
Figure 3 shows a top plan view of figure 2;
Figure 4 shows a cross-section according to figure 2, however, in the locked position, and
Figure 5 shows a view from above of figure 4.

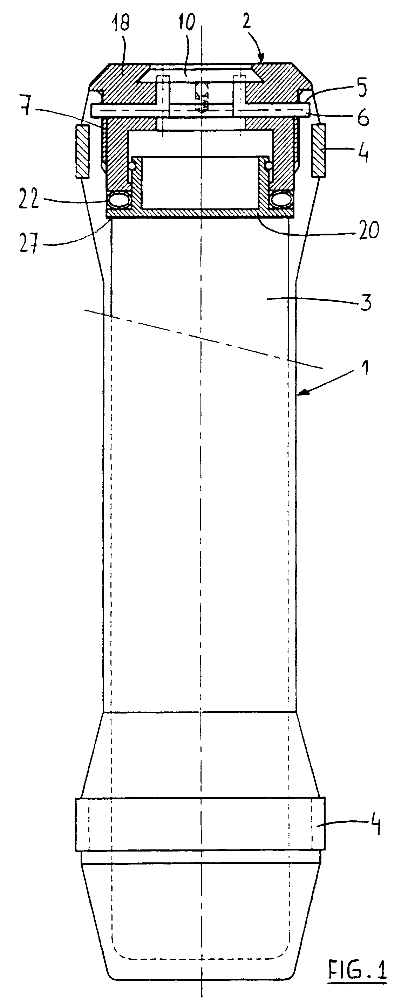

The pneumatic post cartridge shown in figure 1 partially in a side elevational view and partially as a longitudinal cross-section, comprises a body 1 and a lid 2. The body 1 comprises at one side an opening 3 which allows access to the inner part of the body and which by means of the lid 2 can be locked. Of course, the body 1 can also be provided at the opposite side of the corresponding opening.

On the outside of the body 1 rings 4 are applied, which in a way known per se take care of the guiding of the pneumatic post cartridge in a pneumatic post system. Further such rings can take care of the drive of the pneumatic post cartridge under the influence of pressure differences.

In the embodiment shown, the lid 2 partially falls into the opening 3 of the body 1. In the inner wall of the body 1 a round going internal circumferential slot 5 is recessed, which cooperates as locking opening with locking means 6 in a way which will be further elucidated later. It is also possible that there are two separate locking openings.

The lid 2 and the body 1 comprise a cooperating screw thread 7, so that the lid 2 can be screwed into the body 1 for closing the opening 3.

For a further description of the lid 2 now reference is made to figs. 2-5.

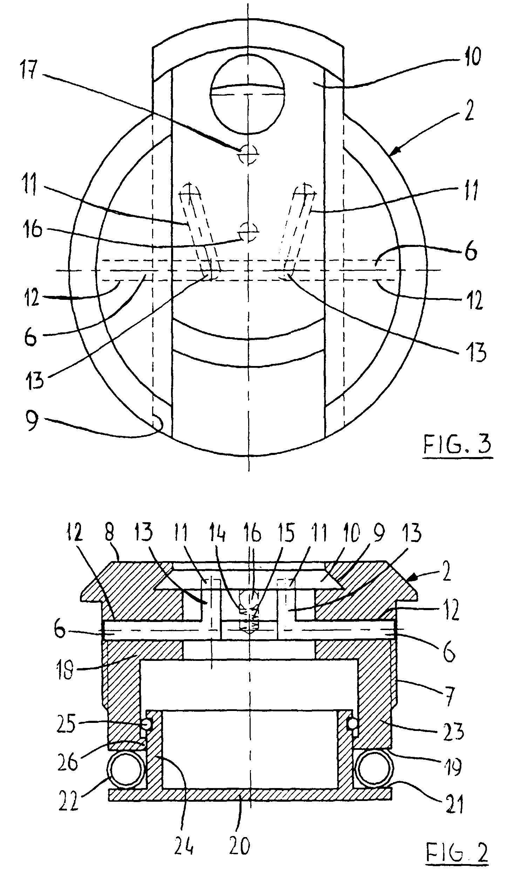

As can be seen clearly in fig. 2 and fig. 3, in the upper face 8 of the lid 2 a diametrically extending recess 9 is formed, in which a plate member 10 is received in a slidable way. In this plate member 10 two slots 11 have been recessed (see fig. 3). In the lid 2 two channels 12 lying opposite to each other have been recessed, which extend substantially transversally to the direction of movement of the plate member 10 (i.e. transversally to the recess 9). In each channel 12 a locking pin 6 is received which forms a locking means, having at its inner end a converted end 13 engaging in one of the slots 11. The slots 11 form an angle with the direction of movement of the plate member 10 as is visible in fig. 3.

The slots 11 act as a transmission mechanism between the plate member 10 and the locking pins 6. In the position of the plate member 10 shown in fig. 3, where the plate member extends beyond the outer circumference of the lid 2, the converted ends 13 of the locking pins 6 are positioned in the ends of the slots 11 that are the most closely spaced. Because of this, the locking pins 6 lie with their exterior ends within the outer circumference of the lid 2 and are in the non-locked position.

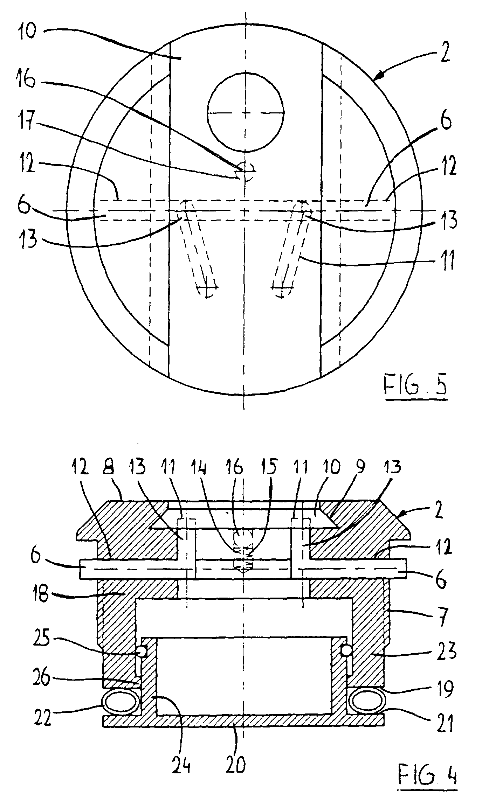

By sliding the plate member 10 to the position shown in fig. 5, the locking pins 6 are moved into the position shown in fig. 4 by means of the slots 11, whereat their ends project beyond the local circumference of the lid 2 and engage the circumferential slot 5 in the body 1 of the pneumatic post cartridge, as shown in fig 1.

Sliding the plate member 10 from the position shown in fig. 3 to the position shown in fig. 4 is only possible, when the locking pins 6 with their ends are aligned exactly axial with the circumferential slot 5 in the body 1. If such an alignment has not been accomplished, the plate member 10 cannot take the position shown in fig. 5 and the pneumatic post cartridge cannot be inserted into the pneumatic post system. In this way a protection is provided which makes it impossible to insert a pneumatic post cartridge into the pneumatic post system, while the lid 2 does not close the opening 3 in a correct way. For that matter, the length of the cooperating screw thread 7 has to be such, that it does not allow to screw the lid 2 into the body 1 only over a small distance, such, that the locking pins 6 can be moved outwardly above the body 1 and in this way do not engage in the circumferential slot 5. In that case the lid would not be locked but the plate member 10 would fall within the circumference thereof and allow the insertion of the pneumatic post cartridge, which is undesired.

When the locked position according to fig. 4 and fig. 5 is obtained and the lid 2 has closed the opening 3 of the body 1, the pneumatic post cartridge can be inserted into the pneumatic post system. Once the pneumatic post cartridge is in the pneumatic post system, the lid 2 cannot become detached from the body 1 unintendedly. Thereto the plate member 10 would have to be slid into the position shown in fig. 3; in this position the plate member 10 projects beyond the outer circumference of the lid 2. Since the pneumatic post cartridge, however, is within the pneumatic post system, the plate member 10 cannot assume this position, because it is hindered by the inner wall of the pneumatic post system, and so it is prevented in a reliable way that the lid becomes detached.

In the lid 2, as shown in fig. 2 and fig. 4, a receiving opening 14 is formed, in which a ball 16 is received, which is loaded by a spring 15. The ball 16, in the position of the plate member 10 as shown in fig. 5, can, under the influence of the spring force of the spring 15, snap into a recess 17, which is formed in the underside of the plate member 10. In this way a tangible and/or audible indication is provided which indicates that the plate member 10 has reached the position in which the locking pins 6 have taken their locked position.

The pneumatic post cartridge as shown in the drawing is especially suitable for the conveyance of fluids or the like. The construction is such, that between the lid 2 and the body 1 a fluid tight connection can be formed. Thereto the lid comprises a first part 18 with a downwardly directed upper circumferential wall 19. Telescopically slidable in this first part 18 a second part 20 is received with an upwardly directed circumferential surface 21. Between the upper circumferential wall 19 and the circumferential surface 21 a deformable sealing element 22 is placed.

Between a downwardly directed tubular wall 23 of the first part 18 and an upwardly directed shaft part 24 of the second part 20 finally, an O-ring 25 is positioned which in an extreme position of the second part 20 can cooperate with an inwardly directed thickening 26 at the lowest end of the tubular wall 23. In this case the meaning of cooperating is that the thickening 26 prevents the first part 18 and the second part 20 from moving apart too far, because the O-ring 25 engages the thickening 26. The dimension of the thickening 26, however, is such, that a first mounting of the second part 20 within the first part 18 remains possible.

In the position shown in fig. 2, the first part 18 and the second part 20 are positioned in such an in-between distance, that the sealing element 22 is in a released position.

When the lid 2 is screwed into the body 1 the underside of the second part 20 engages an internal abutment surface or shoulder 27 (see fig. 1) of the body 1. Because of this the second part 20 will be pushed into the first part 18 telescopically (see fig. 4) at which the sealing element 22 is compressed and expands in a circumferential direction. Because of this the sealing element 22 engages the inner wall of the body 1 and forms an effective, fluid tight sealing.

The dimensions of the various components of the lid 2 are chosen such, that in the locked position (shown in fig. 4) such a sliding into each other of the first part 18 and the second part 20 of the lid 2 has taken place, that with the help of the sealing element 22 an effective sealing is obtained. This means that when the plate member 10 can be slid into the position shown in fig. 5, this also is an indication for the fact that an effective sealing has been accomplished.

Not shown are possibly applied chemical indication means which can indicate the occurrence of a leakage in the body 1. Further, in the receiving opening within the body 1 partitions may be placed to exert a subduing effect on the fluids received in the body 1, especially when the pneumatic post cartridge is subject to greater accelerations.

Besides the shown and discussed screw thread connection 7 between the lid 2 and the body 1 also other ways of coupling can be applied, such as a bayonet coupling or the like. Regardless of the applied type of coupling, a relative movement between the lid 2 and the body 1 must take place before reaching the locked position. For obtaining this relative movement, the plate member 10 is advantageous, since this provides an extra engagement point on the surface of the lid 2, which is otherwise smooth.

The invention is not limited to the embodiment described before, which can be varied widely within the scope of the invention as defined by the claims. For example it is possible that the locking pins can be operated by means of a different transmission mechanism. It is also possible to apply operating elements having a different form than the plate member 10 with which, however, in each case it is required that such operating elements in the non-locked position project beyond the outer circumference of the pneumatic post cartridge and in the locked position are within the outer circumference.

## Claims

1. Pneumatic post cartridge having at least at one end a body provided with an opening, which can be closed by a lid, **characterised** in that the lid is provided with locking means, which can be operated by operating elements, which operating elements in a non-locked position of the locking means extend beyond the outer circumference of the pneumatic post cartridge and in the locked position are positioned within this outer circumference.

2. Pneumatic post cartridge according to claim 1, **characterised** in that the operating elements comprise a plate member slidable on the upper face of the lid , which by way of a transmission mechanism engages the locking means.

3. Pneumatic post cartridge according to claim 2, **characterised** in that the locking means comprise at least one locking pin, which is movable in the lid substantially transversally to the direction of movement of the plate member, which pin in the locked position engages in a locking opening formed in the body and which contains a locking pin, engaging in a recessed slot in the plate member, which forms an angle with the direction of movement of the plate member.

4. Pneumatic post cartridge according to claim 3, **characterised** in that two oppositely positioned locking pins are applied.

5. Pneumatic post cartridge according to one of the previous claims, **characterised** by indication means for the provision of a tangible and/or audible indication of the locked position of the locking means.

6. Pneumatic post cartridge according to claim 5 and one of the claims 2-4, **characterised** in that in a receiving opening of the lid below the plate member a spring-loaded snap part, such as a ball or alike, is placed, which in the locked position engages in the snap recess which is formed in the underside of the plate member.

7. Pneumatic post cartridge according to one of the claims 1-6, **characterised** in that between the lid and the body a sealing element is placed, which in the locked position brings about a fluid tight engagement between both cartridge components.

8. Pneumatic post cartridge according to claim 7, **characterised** in that the lid comprises a first part with a downwardly directed frontal circumferential rim receiving the locking means and the operating elements, and a second part received telescopically slidable in this first part and having an upwardly directed circumferential surface positioned axially opposite the frontal circumferential rim wherein between the circumferential rim and the circumferential surface a deformable sealing element is placed with such a dimension that it, at least in the locked position, projects beyond the local outer circumference of the lid for engaging the body of the pneumatic post cartridge and which body is provided with an internal abutment surface for engaging the second part of the lid when placing this into the body.

9. Pneumatic post cartridge according to claim 8, **characterised** in that the first lid part comprises a downwardly directed tubular wall, while the second lid part comprises an upwardly directed shaft part, positionable therein through interposition of an O-ring.

10. Pneumatic post cartridge according to claim 9, **characterised** in that the tubular wall at its lower end comprises an inwardly directed thickening.

11. Pneumatic post cartridge according to one of the claims 1-10, **characterised** in that the lid can be screwed into the body.
